# EUROPÄISCHE PATENTANMELDUNG

(11) **EP 2 180 440 A1**
(43) Veröffentlichungstag der Anmeldung: **28.04.2010**
(21) Anmeldenummer: 09012772.1
(22) Anmeldetag: 08.10.2009
(51) Int. Cl.: G06Q 10/00

(54) **Verfahren zum rechnergestützten Verarbeiten von digitalen Beschreibungsdaten eines technischen Systems**

(30) Priorität: 21.10.2008 EP 08018371
(71) Anmelder: SIEMENS AKTIENGESELLSCHAFT, 80333 München (DE)
(72) Erfinder: Eger, Kolja, Dr., 85521 Ottobrunn (DE); Gerdes, Christoph, 81667 München (DE)

(57) **Zusammenfassung**

Die Erfindung beschreibt Verfahren zum rechnergestützten Verarbeiten von digitalen Beschreibungsdaten eines technischen Systems, welche einen hierarchischen Aufbau des technischen System basierend auf einer Mehrzahl von Hierarchieebenen beschreiben, wobei jede Hierarchieebene eine oder mehrere technische Merkmale (C1, C2, ..., C16) des technischen Systems als Knoten einer Baumstruktur enthält und der oder die Kindknoten eines Elternknotens die technischen Untermerkmale (C1, C2, ..., C16) des den Elternknoten repräsentierenden technischen Merkmals (C1, C2, ..., C16) in der nächst tieferen Hierarchieebene entsprechen. In dem erfindungsgemäßen Verfahren werden basierend auf den digitalen Beschreibungsdaten auf einer Benutzerschnittstelle in Antwort auf Benutzerinteraktionen verschiedene Ansichten (A1, A2, A3) generiert, wobei eine jeweilige Ansicht (A1, A2, A3) einem technischen Merkmal (C1, C2, ..., C16) des technischen Systems zugeordnet ist. In der jeweiligen Ansicht (A1, A2, A3) werden das zugeordnete technische Merkmal (C1, C2, ..., C16) und dessen technische Untermerkmale (C1, C2, ..., C16) in zumindest der nächst tieferen Hierarchieebene als ineinander verschachtelte flächige Objekte (F1, F2, ..., F13) wiedergegeben, wobei das flächige Objekt (F1, F2, ..., F13) eines technischen Untermerkmals (C1, C2, ..., C16) innerhalb des flächigen Objekts (F1, F2, ..., F13) des den Elternknoten des technischen Untermerkmals (C1, C2, ..., C16) repräsentierenden technischen Merkmals (C1, C2, ..., C16) angeordnet ist. Ferner sind in zumindest einem Teil der Ansichten (A1, A2, A3) die wiedergegebenen technischen Untermerkmale (C1, C2, ..., C16) durch einen Benutzer auswählbar, wodurch eine entsprechende Ansicht für das Untermerkmal erzeugt wird.

## Beschreibung

Die Erfindung betrifft ein Verfahren zum rechnergestützten Verarbeiten von digitalen Beschreibungsdaten eines technischen Systems sowie eine entsprechende Vorrichtung und ein entsprechendes Computerprogrammprodukt.

Zur rechnergestützten Darstellung der Konfiguration eines technischen Systems basierend auf digitalen Beschreibungsdaten gibt es im Stand der Technik verschiedene Verfahren. Im Bereich der technischen Entwicklung von Automatisierungssystemen für Umspannwerke ist die Darstellung entsprechender Merkmale des Umspannwerks in der Form eines Verzeichnisbaums bekannt, wobei durch den Aufruf entsprechender Verzeichnisse, welche Merkmale des Umspannwerks repräsentieren, die Untermerkmale des jeweiligen Merkmals wiedergegeben werden. Es wird somit unmittelbar die Baumstruktur des Aufbaus des technischen Systems wiedergegeben. Zur Visualisierung ist dabei in der Regel eine große Datenmenge zu verarbeiten und die Baumstruktur erstreckt sich über eine Vielzahl von Hierarchieebenen, so dass es durch die direkte Wiedergabe dieser Baumstruktur oftmals für den Benutzer schwierig ist, relevante Informationen bezüglich des technischen Systems aufzufinden bzw. den momentanen Zustand des technischen Systems zu beurteilen.

Aufgabe der Erfindung ist es deshalb, die digitalen Beschreibungsdaten eines technischen Systems derart zu verarbeiten, dass eine einfache und intuitive Visualisierung des Aufbaus des technischen Systems gewährleistet ist.

Diese Aufgabe wird durch die unabhängigen Patentansprüche gelöst. Weiterbildungen der Erfindung sind in den abhängigen Ansprüchen definiert.

In dem erfindungsgemäßen Verfahren werden rechnergestützt Beschreibungsdaten eines technischen Systems verarbeitet, welche einen hierarchischen Aufbau des technischen Systems basierend auf einer Mehrzahl von Hierarchieebenen beschreiben, wobei jede Hierarchieebene eine oder mehrere technische Merkmale des technischen Systems als Knoten einer Baumstruktur enthält und der oder die Kindknoten eines Elternknotens den technischen Untermerkmalen des den Elternknoten repräsentierenden technischen Merkmals in der nächst tieferen Hierarchieebene entsprechen. Der Begriff des technischen Merkmals bzw. technischen Untermerkmals ist dabei weit zu verstehen und kann jede beliebige technische Spezifikation des technischen Systems betreffen. Insbesondere umfassen die technischen Merkmale technische Komponenten des technischen Systems und/oder statische bzw. dynamische (d.h. sich zeitlich verändernde) technische Eigenschaften oder Zustände von technischen Komponenten des technischen Systems und/oder von technischen Komponenten bereitgestellte Dienste.

Erfindungsgemäß werden basierend auf den digitalen Beschreibungsdaten auf einer Benutzerschnittstelle in Antwort auf Benutzerinteraktionen verschiedene Ansichten generiert, wobei eine jeweilige Ansicht einem technischen Merkmal des technischen Systems zugeordnet ist. In der jeweiligen Ansicht werden dabei das entsprechend zugeordnete technische Merkmal und dessen technischen Untermerkmale in zumindest der nächst tieferen Hierarchieebene als ineinander verschachtelte flächige Objekte wiedergegeben, wobei das flächige Objekt eines technischen Untermerkmals innerhalb des flächigen Objekts des den Elternknoten des technischen Untermerkmals repräsentierenden technischen Merkmals angeordnet ist.

In dem erfindungsgemäßen Verfahren sind in zumindest einem Teil der Ansichten die wiedergegebenen, technische Untermerkmale darstellende Merkmale durch einen Benutzer auswählbar, wobei nach Auswahl eines technischen Merkmals die dem ausgewählten technischen Merkmal zugeordnete Ansicht auf der Benutzerschnittstelle generiert wird.

Mit dem erfindungsgemäßen Verfahren wird eine kompakte Art der Visualisierung von entsprechenden Merkmalen bzw. Untermerkmalen eines hierarchisch aufgebauten technischen Systems geschaffen. Dies wird durch die Wiedergabe von flächigen Objekten erreicht. Dabei impliziert der Begriff der Wiedergabe eines flächigen Objekts, dass das dem flächigen Objekt zugeordnete technische Merkmal über das flächige Objekt identifizierbar ist, beispielsweise in der Form eines entsprechenden, im flächigen Objekt enthaltenen Bezeichners des Merkmals.

In einer besonders bevorzugten Ausführungsform enthält zumindest ein Teil der flächigen Objekte eine Beschreibung des durch das jeweilige flächige Objekt repräsentierten Merkmals. Hierdurch können auf einfache Weise neben einer Visualisierung der hierarchischen Baumstruktur des technischen Systems auch weitere Informationen zu den entsprechenden Merkmalen des technischen Systems innerhalb einer Ansicht wiedergegeben werden.

In einer weiteren bevorzugten Ausführungsform wird eine besonders kompakte Darstellung in den jeweiligen Ansichten dadurch erreicht, dass die flächigen Objekte durch Rechtecke repräsentiert werden. Die flächigen Objekte können jedoch auch jede beliebige andere Gestalt in der Form von beliebigen Polygonzügen bzw. Kreisen, Ellipsen und dergleichen aufweisen. Entscheidend ist lediglich, dass auf der Benutzerschnittstelle entsprechende Flächenelemente wiedergegeben sind, welche jeweils einem Merkmal des technischen Systems zuordenbar sind.

In einer weiteren, besonders bevorzugten Ausführungsform des erfindungsgemäßen Verfahrens wird die Darstellung durch flächige Objekte dazu genutzt, um Informationen zum Aufbau des technischen Systems durch die Farbgebung und/oder die Form und/oder die Größe der flächigen Objekte zu vermitteln. Beispielsweise kann über die Farbgebung vermittelt werden, in welcher Hierarchieebene sich ein entsprechendes Merkmal befindet bzw. von welchem Typ das entsprechende Merkmal ist. Durch die Größe des flächigen Objekts kann beispielsweise auch vermittelt werden, wie groß die Datenmenge für die Beschreibung des Merkmals gemäß dem flächigen Objekt mit all seinen Untermerkmalen innerhalb der digitalen Beschreibungsdaten ist.

In einer weiteren, bevorzugten Ausführungsform des erfindungsgemäßen Verfahrens werden in einer jeweiligen Ansicht technische Untermerkmale in Abhängigkeit von deren Ähnlichkeit gemäß einem oder mehreren Ähnlichkeitsmaße angeordnet, wobei technische Untermerkmale mit höherer Ähnlichkeit näher zueinander positioniert werden. Auf diese Weise kann eine entsprechende Clusterung der Untermerkmale nach Ähnlichkeitskriterien erreicht werden, wodurch intuitiv einem Benutzer weitere Informationen über das technische System vermittelt werden.

In einer weiteren, besonders bevorzugten Ausführungsform beschreiben das oder die Ähnlichkeitsmaße eine Ähnlichkeit in Bezug auf funktionale technische Eigenschaften der Untermerkmale. Beispielsweise können durch die Untermerkmale beschriebene Komponenten mit ähnlichen oder den gleichen Funktionen in dem technischen System näher aneinander gruppiert werden. Ebenso können sich die Ähnlichkeitsmaße beispielsweise auf eine räumliche Nähe der entsprechende Untermerkmalen zugeordneten technischen Komponenten beziehen, wobei Komponenten mit großer räumlicher Nähe in der jeweiligen Ansicht vorzugsweise näher zueinander positioniert werden.

In einer weiteren Ausgestaltung des erfindungsgemäßen Verfahrens geben eine oder mehrere der Ansichten jeweils alle Untermerkmale des der jeweiligen Ansicht zugeordneten Merkmals in tieferen Hierarchieebenen wieder. Auf diese Weise kann ein Benutzer in jeder Ansicht unmittelbar erkennen, wie viele weitere Untermerkmale es zu dem gemäß der Ansicht angezeigten Merkmals gibt. Dabei wird durch die Verschachtelung der flächigen Objekte auch sofort die Information vermittelt, wie stark sich die hierarchische Struktur ausgehend von dem angezeigten Merkmal noch in tiefere Hierarchieebenen erstreckt.

In einer weiteren Ausgestaltung des erfindungsgemäßen Verfahrens ist eine jeweilige Ansicht derart ausgestaltet, dass über eine Benutzerinteraktion zu der Ansicht des Merkmals des Elternknotens des der jeweiligen Ansicht zugeordneten Merkmals gewechselt werden kann. Auf diese Weise kann in der hierarchischen Struktur des technischen Systems auch in höhere Hierarchieebenen zurückgegangen werden. Hierfür ist insbesondere in der jeweiligen Ansicht ein über eine Benutzerinteraktion aktivierbares Element vorgesehen, bei dessen Aktivierung zu dem Elternknoten des der Ansicht zugeordneten Merkmals gewechselt wird.

In einer weiteren Ausgestaltung des erfindungsgemäßen Verfahrens umfasst eine Benutzerinteraktion zur Auswahl eines Merkmals die Aktivierung eines auf dem flächigen Objekt des Merkmals positionierten Mauszeigers. Hierdurch können gängige Benutzerschnittstellen in der Form von Bildschirm und Computermaus zur Navigation zwischen den Hierarchieebenen des technischen Systems verwendet werden.

In einer weiteren Ausgestaltung des erfindungsgemäßen Verfahrens liegen die digitalen Beschreibungsdaten des technischen Systems als eine oder mehrere Dateien vor, insbesondere als Dateien im XML-Format (XML = Extensible Markup Language) und/oder im SCL-Format (SCL = Substation Configuration Language), welches zur Beschreibung der Konfiguration von Energieerzeugungs- und/oder Energieverteilungsanlagen eingesetzt wird.

Die digitalen Beschreibungsdaten können in dem erfindungsgemäßen Verfahren Konfigurationsinformationen des technischen Systems enthalten. Diese Konfigurationsinformationen können gegebenenfalls auch über die Benutzerschnittstelle durch einen Benutzer zumindest teilweise veränderbar sein. Diese Variante der Erfindung wird insbesondere zur Visualisierung von Beschreibungsdaten im Rahmen eines sog. Engineering-Programms zum Entwurf eines technischen Systems eingesetzt. Ebenso besteht die Möglichkeit, dass die digitalen Beschreibungsdaten Betriebsinformationen (z.B. Echtzeit-Zustände) eines realen technischen Systems enthalten. Diese Variante der Visualisierung wird insbesondere in einem Überwachungs- und/oder Steuerprogramm für ein technisches System integriert. Dabei können bestimmte Betriebsdaten gegebenenfalls auch über die Benutzerschnittstelle veränderbar sein.

In einer besonders bevorzugten Ausführungsform des erfindungsgemäßen Verfahrens beschreiben die digitalen Beschreibungsdaten ein technisches System in der Form einer elektrischen Energieerzeugungs- und/oder Energieverteilungsanlage, insbesondere eines Umspannwerks.

Neben dem oben beschriebenen Verfahren betrifft die Erfindung ferner eine Vorrichtung zum rechnergestützten Verarbeiten von digitalen Beschreibungsdaten eines technischen Systems, wobei die Vorrichtung eine Recheneinheit umfasst, mit der auf einer Benutzerschnittstelle jeweilige Ansichten basierend auf dem erfindungsgemäßen Verfahren erzeugbar sind.

Die Erfindung betrifft darüber hinaus ein Computerprogrammprodukt mit einem auf einem maschinenlesbaren Träger gespeicherten Programmcode zur Durchführung des erfindungsgemäßen Verfahrens, wenn das Programm auf einem Rechner läuft.

Ausführungsbeispiele der Erfindung werden nachfolgend anhand der beigefügten Figuren detailliert beschrieben.

### Es zeigen:

- Fig. 1: eine schematische Darstellung einer mit einer Ausführungsform des erfindungsgemäßen Verfahrens generierten Ansicht; und
- Fig. 2: eine schematische Darstellung, welche den Wechsel zwischen verschiedenen Ansichten gemäß einer Ausführungsform des erfindungsgemäßen Verfahrens verdeutlicht.

Nachfolgend wird das erfindungsgemäße Verfahren basierend auf der Visualisierung des Aufbaus eines technischen Systems in der Form eines Umspannwerks beschrieben, wobei die nachfolgende Beschreibung generisch auf jedes andere technische System anwendbar ist. Die von dem erfindungsgemäßen Verfahren zu verarbeitenden digitalen Beschreibungsdaten des Umspannwerks liegen dabei als Konfigurationsinformationen vor, welche in verschiedenen XML-formatierten SCL-Dateien (SCL = Substation Configuration Language) gespeichert sind. Üblicherweise umfassen diese Dateien eine sog. SSD-Datei (SSD = System Specification Description), eine ICD-Datei (ICD = IED Capability Description, wobei IED "Intelligent Electronic Device" bedeutet), eine SCD-Datei (SCD = Substation Configuration Description) sowie eine CID-Datei (CID = Configured IED Description).

Die Erfindung wird nachfolgend basierend auf der Visualisierung eines technischen Systems während des Engineerings (d.h. während der technischen Entwicklung) des Systems erläutert, wobei die Visualisierung gegebenenfalls auch in Echtzeit während des Betriebs des technischen Systems eingesetzt werden kann, um bestimmte Informationen zum momentanen Zustand einzelner Komponenten des technischen Systems darzustellen.

Basierend auf der hier beschriebenen Ausführungsform der Erfindung wird rechnergestützt auf einer Anzeigeeinheit in der Form eines Displays der hierarchische Aufbau des Umspannwerks in verschiedenen Hierarchieebenen visualisiert. Das Umspannwerk besteht dabei aus einer Vielzahl von technischen Merkmalen. Unter Merkmalen sind beliebige Komponenten des Umspannwerks bzw. beliebige Eigenschaften von Komponenten bzw. Attribute von Komponenten, durch Komponenten bereitgestellte Dienste bzw. Datentypen und dergleichen zu verstehen. Es liegt somit ein hierarchischer Strukturbaum des Umspannwerks vor, auf dessen höchster Ebene als Merkmal die Bezeichnung des Umspannwerks selbst steht. Über mehrere Hierarchieebenen verteilen sich dann die einzelnen Funktionalitäten und technischen Geräte des Umspannwerks basierend auf Knoten des Strukturbaums bis hin zu Blattknoten. Die einzelnen Knoten mit der gleichen Anzahl von Vorgängerknoten entlang eines Pfads des Baums liegen dabei in der gleichen Hierarchieebene und für jeden Knoten in dem Baum, der untergeordnete Merkmale in tieferen Hierarchieebenen aufweist, kann eine erfindungsgemäße Ansicht erzeugt werden, wie im Folgenden erläutert wird.

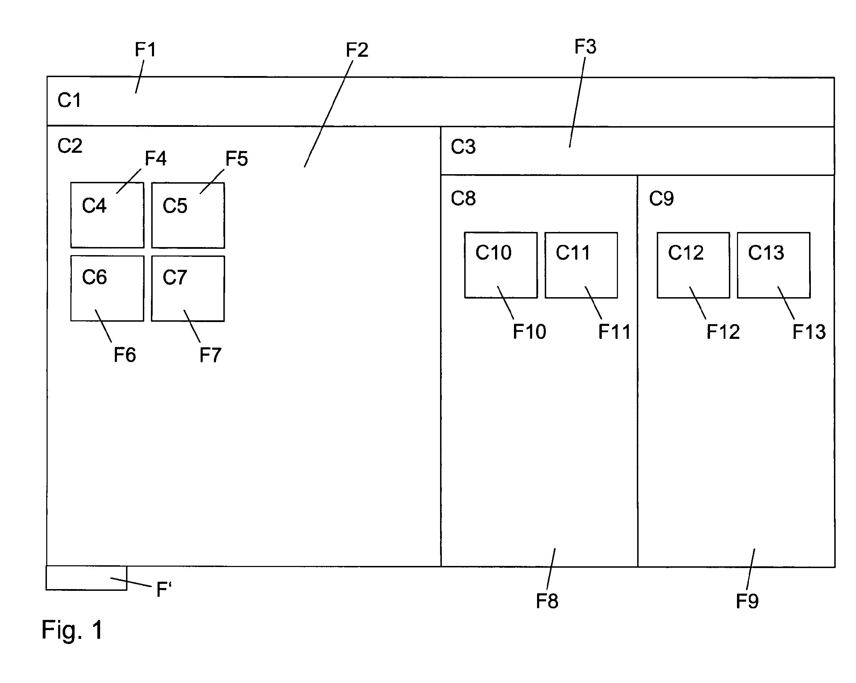

Fig. 1 zeigt schematisch eine Ansicht, welche mit einer Ausführungsform des erfindungsgemäßen Verfahrens für ein Merkmal in der Form einer Komponente C1 des technischen Systems generiert wurde. Die Darstellung beruht dabei auf der sog. Treemap-Darstellung, bei der in geeigneter Weise eine hierarchische Struktur über ineinander verschachtelte Rechtecke generiert wird. Gemäß Fig. 1 wird als Hintergrund ein Rechteck in der Form eines ersten Fensters F1 erzeugt, wobei der Name der technischen Komponente, dessen Untermerkmale wiederzugeben sind, im linken oberen Eck des Fensters F1 steht. Hier und im Folgenden werden Merkmale bzw. Untermerkmale in der Form von Komponenten betrachtet und für die entsprechenden Namen der Komponenten werden Bezugszeichen C1, C2, ..., C14 verwendet, wobei die Bezugszeichen Platzhalter für die entsprechenden Bezeichnungen der Komponenten sind.

Das Rechteck F1 ist mit einer ersten Farbe wiedergegeben, wobei von dem Rechteck nur ein oberer vertikaler Balken ersichtlich ist. Dies liegt daran, dass dieses Rechteck mit weiteren, darin verschachtelten Rechtecken in der Form von Fenstern F2 bis F13 überlagert ist. In der Ausführungsform der Fig. 1 beinhaltet die Komponente C1 zwei Unterkomponenten C2 und C3, denen wiederum entsprechende Fenster F2 bzw. F3 zugeordnet sind. Die beiden Fenster F2 und F3 füllen dabei den gesamten Bereich des Fensters F1 bis auf den oberen Balken in der Höhe des Namens der Komponente C1 aus. Sie weisen beide die gleiche Farbe auf, welche unterschiedlich von der Farbe des Rechtecks F1 ist. Die Komponente C2 besteht lediglich aus vier weiteren Unterkomponenten C4, C5, C6 und C7, welche als verkleinerte Rechtecke F4, F5, F6 und F7 innerhalb des Rechtecks F2 wiedergegeben sind. Dabei ist in jedem Rechteck wiederum der entsprechende Name der Komponente enthalten. Die Komponenten C4 bis C7 sind dabei Blattknoten im Hierarchiebaum des betrachteten Umspannwerks.

Demgegenüber schließen sich ausgehend von der Komponente C3 noch zwei weitere Hierarchieebenen von Unterkomponenten an. Als Unterkomponenten in der nächst tieferen Hierarchieebene umfasst die Komponente C3 die Unterkomponenten C8 und C9, welche als entsprechende Rechtecke F8 und F9 innerhalb des Rechtecks F3 enthalten sind. Das heißt, die Rechtecke F8 und F9 überlagern das Rechteck F3, so dass von dem Rechteck F3 lediglich ein oberer Balken im Bereich des Namens der Komponente C3 ersichtlich ist. Die Rechtecke F8 und F9 weisen wiederum die gleiche Farbe auf, welche sich jedoch gegenüber der Farbe des Rechtecks F3 unterscheidet. An die Komponenten C8 und C9 schließt sich nunmehr noch eine weitere Hierarchieebene von Komponenten an. Die Komponente C8 umfasst dabei die Unterkomponenten C10 und C11, welche als Rechtecke F10 bzw. F11 innerhalb des Rechtecks F8 wiedergegeben sind, wobei die beiden Rechtecke die gleiche Farbe aufweisen, welche sich jedoch von der Farbe des Hintergrundrechtecks F8 unterscheidet. Ebenso umfasst die Komponente C9 zwei weitere Unterkomponenten C12 und C13, welche analog durch zwei Rechtecke F12 und F13 repräsentiert werden, welche innerhalb des Fenster F9 der Komponente C9 angeordnet sind. Auch für diese Komponenten ist die Farbe der Rechtecke F12 und F13 identisch, unterscheidet sich jedoch von der Farbe des Rechtecks F9.

Die Ansicht der Fig. 1 kann durch eine Benutzerinteraktion mittels eines Mauszeigers bedient werden, wobei ein Benutzer die Möglichkeit hat, die Maus auf die entsprechende Rechtecke zu positionieren und durch einen Mausklick in eine tiefer liegende Hierarchieebene von Unterkomponenten zu gelangen bzw. sich Detailinformationen zu entsprechenden Unterkomponenten anzeigen zu lassen. Klickt ein Benutzer beispielsweise auf das Feld F3 der Komponente C3, bekommt er eine Darstellung analog zu Fig. 1, wobei nunmehr die Komponente C3 das größte Rechteck der Darstellung ist und somit dem Feld F1 der Fig. 1 entspricht. Dieses Feld ist dann analog zu Fig. 1 in zwei Teilfelder eingeteilt, wobei im einen Teilfeld die Komponente C8 und im anderen Teilfeld die Komponente C9 wiedergegeben ist. In der Ansicht der Fig. 1 ist ferner ein Feld F' am unteren linken Rand des Fensters F1 vorgesehen. Gemäß diesem Feld hat der Benutzer ferner die Möglichkeit, von der angezeigten Komponente wieder zu der Komponente in der höheren Hierarchieebene (d.h. dem Elternknoten im Hierarchiebaum) zurückzuspringen.

Die Darstellung der Fig. 1 ist lediglich schematisch und verdeutlicht das Prinzip des erfindungsgemäßen Verfahrens basierend auf wenigen Hierarchieebenen. Üblicherweise weist ein erfindungsgemäß visualisiertes technisches System eine sehr große Anzahl von Hierarchieebenen auf, so dass sich ein Benutzer hierdurch auf einfache Weise in der komplexen hierarchischen Struktur entlang von Pfaden bewegen kann und sich für eine entsprechende Komponente an einer beliebigen Stelle in der hierarchischen Struktur den davon ausgehenden Unterbaum bzw. weitere Detailinformationen zu der Komponente anzeigen lassen kann.

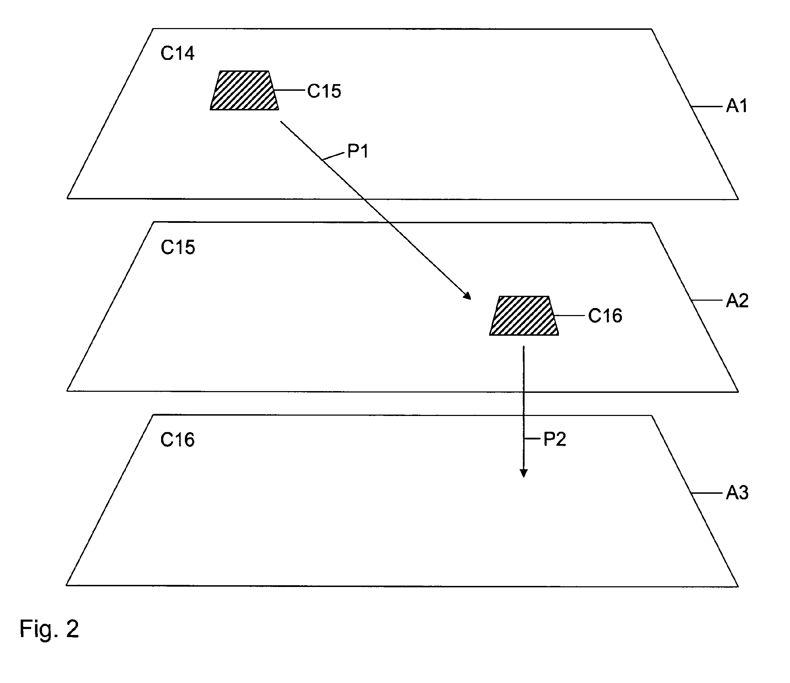

Fig. 2 zeigt nochmals in schematischer Ansicht die Generierung von verschiedenen Ansichten für Komponenten eines technischen Systems in unterschiedlichen Hierarchieebenen. In Fig. 2 sind dabei zur Verdeutlichung in perspektivischer Darstellung entsprechende Ansichten A1, A2 und A3 wiedergegeben, welche im Aufbau jeweils der Ansicht der Fig. 1 entsprechen. Die Ansicht A1 zeigt dabei den Hierarchiebaum unterhalb einer Komponente C14. Aus Übersichtlichkeitsgründen ist dabei lediglich eine Unterkomponente C15 der Komponente C14 als schraffiertes Rechteck angedeutet. Ebenso wird in Fig. 2 das entsprechende Rechteck bzw. Fenster, welches einer Komponente zugeordnet ist, nicht mit einem separaten Bezugszeichen bezeichnet.

Ein Benutzer, der nunmehr mittels seiner Maus auf das Rechteck der Komponente C15 klickt, gelangt dann in eine Ansicht zur Komponente C15, welche in Fig. 2 mit A2 bezeichnet ist und in der aus Übersichtlichkeitsgründen nur die Unterkomponente C16 wiedergegeben ist. Der Vorgang des Mausklicks ist dabei durch den Pfeil P1 verdeutlicht. Wiederum durch einen entsprechenden Klick auf eine beliebige Unterkomponente mittels der Maus gelangt ein Benutzer in eine nächst tiefere Hierarchieebene. Dies ist in Fig. 2 durch den Pfeil P2 für die Auswahl der Unterkomponente C16 angedeutet. Man erkennt, dass durch den Klick auf die Komponente C16 eine entsprechende Ansicht A3 für diese Komponente erzeugt wird.

Mit Hilfe der im Vorangegangenen beschriebenen Visualisierung einer hierarchischen Struktur des Aufbaus eines technischen Systems kann auf einfache Weise auch für komplexe Konfigurationen eine entsprechende Ansicht für Merkmale des technischen Systems auf einem einzigen Bildschirm erzeugt werden. Bei Verwendung der Visualisierung im Bereich des Engineerings eines technischen Systems kann hiermit durch den Benutzer schnell und einfach der Inhalt der Konfigurationsdatei des zu entwerfenden Systems beurteilt werden. Durch geeignete Farbcodierungen, bei denen beispielsweise Merkmale aus aufeinander folgenden Hierarchieebenen in unterschiedlichen Farben und Merkmale in der gleichen Hierarchieebene mit gleichen Farben hervorgehoben werden, können durch den Bediener auf einfache Weise entsprechende Komponenten bzw. Dienste bzw. Attribute des technischen Systems, insbesondere gegebenenfalls auch während des Betriebs des technischen Systems, erfasst werden.

Die Farbcodierung ist dabei nicht nur auf eine Codierung der Hierarchieebenen beschränkt, sondern es können über die Farbe gegebenenfalls auch Merkmale vom gleichen Typ bzw. mit gleichen Eigenschaften in der gleichen Farbe dargestellt werden. Darüber hinaus besteht die Möglichkeit, in der erfindungsgemäßen Visualisierung entsprechende Merkmale, welche basierend auf einem oder mehreren Kriterien als ähnlich angesehen werden, in einem Cluster zusammenzufassen, d.h. in der entsprechenden Ansicht die Rechtecke, welche Merkmale mit ähnlichen Eigenschaften repräsentieren, benachbart anzuordnen. Entsprechende Ähnlichkeitskriterien können dabei basierend auf dem semantischen Bedeutungsinhalt der Merkmale bzw. auf der physikalischen Nähe von Komponenten bzw. auf funktionalen Ähnlichkeiten bzw. auf Ähnlichkeiten im Hinblick auf ein kritisches Verhalten und dergleichen festgelegt sein.

Wie bereits erwähnt, basiert die im Vorangegangenen beschriebene Visualisierung auf der Darstellung des hierarchischen Aufbaus eines Umspannwerks. Dabei werden vorzugsweise in der Ansicht der obersten Hierarchieebene die Ausstattung und die Dienste des Umspannwerks wiedergegeben, wohingegen individuelle Attribute und Datentypen auf der Ansicht der niedrigsten Hierarchieebene enthalten sind. Basierend auf der Aktivierung entsprechender Rechtecke in den einzelnen Ansichten können dabei höhere Detaillierungsgrade in Bezug auf den Aufbau des Umspannwerks und seiner Komponenten erreicht werden. Es besteht ferner die Möglichkeit, die Daten aus der entsprechenden Konfigurationsdatei nur bei Bedarf für die darzustellende Ansicht zu laden. Auf diese Weise wird die Visualisierung speziell für große Dateien oder Daten, welche durch entfernten Zugriff über einen Web-Service abgerufen werden, stark beschleunigt. Die erfindungsgemäße Darstellung kann dabei als einzelne Software-Applikation auf dem entsprechenden, zur Visualisierung verwendeten Rechner vorgesehen sein, sie kann jedoch auch in einem Web-Browser integriert sein.

Wie oben dargelegt, kann die erfindungsgemäße Visualisierung im Rahmen eines Engineering-Werkzeugs zur Konfiguration eines technischen Systems eingesetzt werden. Dabei wird durch die Darstellung in verschiedenen Ansichtsebenen eine intuitive Benutzerschnittstelle zum Zugriff auf die Konfigurationsdateien des technischen Systems geschaffen. Zu Beginn der Konfiguration starten die am Engineering beteiligten Personen auf der Ansicht der obersten Hierarchieebene, wobei zunächst die für das technische System zu verwendende Ausstattung festgelegt wird. In nachfolgenden Schritten wird die Konfiguration dann schrittweise durch den Aufruf von Ansichten in tieferen Hierarchieebenen und durch Hinzufügung von weiteren Detailspezifikationen in diesen Hierarchieebenen verfeinert. Neben der Verwendung der erfindungsgemäßen Visualisierung im Rahmen eines Engineering-Werkzeugs kann die erfindungsgemäße Darstellung auch im Rahmen eines Überwachungs- bzw. Steuerprogramms für ein technisches System eingesetzt werden. Dabei umfassen entsprechende Merkmale in den Ansichten zumindest teilweise Echtzeit-Informationen über den Momentanzustand des technischen Systems und es können über die Ansichten zumindest teilweise bestimmte Parameter des technischen Systems verändert werden.

## Patentansprüche

1. Verfahren zum rechnergestützten Verarbeiten von digitalen Beschreibungsdaten eines technischen Systems, welche einen hierarchischen Aufbau des technischen System basierend auf einer Mehrzahl von Hierarchieebenen beschreiben, wobei jede Hierarchieebene eine oder mehrere technische Merkmale (C1, C2, ..., C16) des technischen Systems als Knoten einer Baumstruktur enthält und der oder die Kindknoten eines Elternknotens den technische Untermerkmalen (C1, C2, ..., C16) des den Elternknoten repräsentierenden technischen Merkmals (C1, C2, ..., C16) in der nächst tieferen Hierarchieebene entsprechen, bei dem:
- basierend auf den digitalen Beschreibungsdaten auf einer Benutzerschnittstelle in Antwort auf Benutzerinteraktionen verschiedene Ansichten (A1, A2, A3) generiert werden, wobei eine jeweilige Ansicht (A1, A2, A3) einem technischen Merkmal (C1, C2, ..., C16) des technischen Systems zugeordnet ist;
- in der jeweiligen Ansicht (A1, A2, A3) das zugeordnete technische Merkmal (C1, C2, ..., C16) und dessen technische Untermerkmale (C1, C2, ..., C16) in zumindest der nächst tieferen Hierarchieebene als ineinander verschachtelte flächige Objekte (F1, F2, ..., F13) wiedergegeben werden, wobei das flächige Objekt (F1, F2, ..., F13) eines technischen Untermerkmals (C1, C2, ..., C16) innerhalb des flächigen Objekts (F1, F2, ..., F13) des den Elternknoten des technischen Untermerkmals (C1, C2, ..., C16) repräsentierenden technischen Merkmals (C1, C2, ..., C16) angeordnet ist;
- in zumindest einem Teil der Ansichten (A1, A2, A3) die wiedergegebenen, technische Untermerkmale (C1, C2, ..., C16) darstellende Merkmale (C1, C2, ..., C16) durch einen Benutzer auswählbar sind, wobei nach Auswahl eines technischen Merkmals (C1, C2, ..., C16) die dem ausgewählten technischen Merkmal (C1, C2, ..., C16) zugeordnete Ansicht (A1, A2, A3) auf der Benutzerschnittstelle generiert wird.

2. Verfahren nach Anspruch 1, bei dem die technischen Merkmale (C1, C2, ..., C16) technische Komponenten und/oder statische oder dynamische technische Eigenschaften oder Zustände von technischen Komponenten und/oder von technischen Komponenten bereitgestellte Dienste umfassen.

3. Verfahren nach Anspruch 1 oder 2, bei dem die flächigen Objekte (F1, F2, ..., F13) zumindest teilweise eine Beschreibung des durch das jeweilige flächige Objekt (F1, F2, ..., F13) repräsentierten Merkmals (C1, C2, ..., C16) enthalten.

4. Verfahren nach einem der vorhergehenden Ansprüche, bei dem die flächigen Objekte (F1, F2, ..., F13) durch Rechtecke repräsentiert werden.

5. Verfahren nach einem der vorhergehenden Ansprüche, bei dem Informationen zum Aufbau des technischen Systems durch die Farbgebung und/oder die Form und/oder die Größe der flächigen Objekte (F1, F2, ..., F13) vermittelt werden.

6. Verfahren nach einem der vorhergehenden Ansprüche, bei dem in einer jeweiligen Ansicht (A1, A2, A3) die technische Untermerkmale (C1, C2, ..., C16) des der jeweiligen Ansicht zugeordneten technischen Merkmals (C1, C2, ..., C16) in Abhängigkeit von deren Ähnlichkeit gemäß einem oder mehreren Ähnlichkeitsmaßen angeordnet werden, wobei technische Untermerkmale (C1, C2, ..., C16) mit höherer Ähnlichkeit näher zueinander positioniert werden.

7. Verfahren nach Anspruch 6, bei dem das oder die Ähnlichkeitsmaße eine Ähnlichkeit in Bezug auf funktionale technische Eigenschaften der Untermerkmale und/oder auf eine räumliche Nähe der entsprechenden Untermerkmalen (C1, C2, ..., C16) zugeordneten technischen Komponenten beschreiben.

8. Verfahren nach einem der vorhergehenden Ansprüche, bei dem eine oder mehrere der Ansichten (A1, A2, A3) jeweils alle Untermerkmale (C1, C2, ..., C16) des der jeweiligen Ansicht zugeordneten Merkmals (C1, C2, ..., C16) in tieferen Hierarchieebenen wiedergeben.

9. Verfahren nach einem der vorhergehenden Ansprüche, bei dem eine jeweilige Ansicht (A1, A2, A3) derart ausgestaltet ist, dass über eine Benutzerinteraktion zu der Ansicht (A1, A2, A3) des Merkmals (C1, C2, ..., C16) des Elternknotens des der jeweiligen Ansicht (A1, A2, A3) zugeordneten Merkmals (C1, C2, ..., C16) gewechselt werden kann.

10. Verfahren nach einem der vorhergehenden Ansprüche, bei dem eine Benutzerinteraktion zur Auswahl eines Merkmals (C1, C2, ..., C16) die Aktivierung eines auf dem flächigen Objekt (F1, F2, ..., F13) des Merkmals (C1, C2, ..., C16) positionierten Mauszeigers umfasst.

11. Verfahren nach einem der vorhergehenden Ansprüche, bei dem die digitalen Beschreibungsdaten des technischen Systems als eine oder mehrere Dateien vorliegen, insbesondere als Dateien im XML-Format und/oder im SCL-Format.

12. Verfahren nach einem der vorhergehenden Ansprüche, bei dem die digitalen Beschreibungsdaten Konfigurationsinformationen des technischen Systems enthalten.

13. Verfahren nach einem der vorhergehenden Ansprüche, bei dem die digitalen Beschreibungsdaten Betriebsinformationen des technischen Systems enthalten.

14. Verfahren nach einem der vorhergehenden Ansprüche, bei dem die Beschreibungsdaten ein technisches System in der Form einer elektrischen Energieerzeugungs- und/oder Energieverteilungsanlage beschreiben, insbesondere eines Umspannwerks.

15. Vorrichtung zum rechnergestützten Verarbeiten von digitalen Beschreibungsdaten eines technischen Systems, wobei die Vorrichtung eine Recheneinheit umfasst, mit der auf einer Benutzerschnittstelle jeweilige Ansichten (A1, A2, A3) basierend auf einem Verfahren nach einem der vorhergehenden Ansprüche erzeugbar sind.

16. Computerprogrammprodukt mit einem auf einem maschinenlesbaren Träger gespeicherten Programmcode zur Durchführung eines Verfahrens nach einem der Ansprüche 1 bis 14, wenn das Programm auf einem Rechner läuft.
